# EUROPEAN PATENT SPECIFICATION

(11) **EP 2 760 173 B1**
(45) Date of publication and mention of the grant of the patent: **08.08.2018**
(21) Application number: 11864664.5
(22) Date of filing: 27.09.2011
(51) Int. Cl.: H04L 29/06, H04W 92/20, H04L 12/00, H04J 3/06, H04W 88/18, H04L 12/46

(54) **DATA TRANSMISSION METHOD, DEVICE AND SYSTEM**
DATENÜBERTRAGUNGSVERFAHREN, -VORRICHTUNG UND -SYSTEM
PROCÉDÉ, DISPOSITIF ET SYSTÈME DE TRANSMISSION DE DONNÉES

(43) Date of publication of application: 30.07.2014
(73) Proprietor: Huawei Technologies Co., Ltd., Longgang District Shenzhen, Guangdong 518129 (CN)
(72) Inventor: WANG, Yuemeng, Shenzhen Guangdong 518129 (CN)
(74) Representative: Pfenning, Meinig & Partner mbB
(86) International application number: PCT/CN2011/080198
(87) International publication number: WO 2012/149771

(56) References cited:
- EP-A2- 1 176 774
- EP-A2- 1 282 320
- CN-A- 1 643 953
- CN-A- 101 022 406
- KR-B1- 100 554 170
- US-A1- 2007 053 364
- US-A1- 2010 098 433
- US-B1- 6 963 561
- US-B2- 7 929 907

## Description

### FIELD OF THE INVENTION

The present invention relates to the communications field, and in particular to a data transmission method, device, and system.

### BACKGROUND OF THE INVENTION

With the development of communications technologies, communications devices are updated faster and faster. Interconnection and interworking and resource sharing must be implemented between a new base station and an original base station to protect existing investment of an operator. The original base station generally refers to a 2G (Second Generation, second generation mobile communications technology) base station. The 2G base station mainly provides a voice service and has a low transmission bandwidth requirement. An access form is mainly an E1 transmission line with a rate of 2 Mbps or a T1 transmission line with a rate of 1.5 Mbps. These E1 or T1 transmission lines, on which a TDM (Time Divided Multiplexing, time divided multiplexing) mode is used for transmission, are borne on an SDH (Synchronous Digital Hierarchy, synchronous digital hierarchy) line and have weak burst and a high clock requirement. The new base station generally refers to a 3G (3rd Generation, third generation mobile communications technology) base station and a 4G (Fourth Generation, fourth generation mobile communications technology) base station.

In addition to the traditional voice service, this type of base stations also provides a data service that has strong burst and a high bandwidth requirement. An access form is mainly an IP (Internet Protocol, Internet Protocol) transmission line that uses an FE (Fast Ethernet, Fast Ethernet) or a GE (Gigabit Ethernet, Gigabit Ethernet) as an interface. Because an E1 or a T1 transmission mode is not compatible with an IP transmission mode, two implementation methods are available in the prior art for implementing data transmission between the new base station and the original base station:
A technical solution in a first prior art is to add an E1 or a T1 interface board unit in the new base station and establish an E1 or a T1 transmission line between the new base station and the original base station in order to implement the data transmission between the new base station and the original base station through the established E1 or T1 transmission line.

A technical solution in a second prior art is to implement the data transmission between the new base station and the original base station by using an RNC (Radio Network Controller, radio network controller) or a higher-level base station. The RNC or the higher-level base station serves as a conversion bridge between the new base station and the original base station. That is, the new base station connects to the RNC or the higher-level base station by using an IP transmission line, the original base station connects to the RNC or the higher-level base station by using an E1 or a T1 transmission line, and data between the new base station and the original base station is transited and transmitted by using the RNC or the higher-level base station.

The prior art has at least the following disadvantages:According to the first prior art, an E1 or a T1 interface board unit is added in the new base station. However, bandwidth of an E1 or a T1 interface is relatively low, and costs of the transmission bandwidth per unit is high. In addition, implementing the data transmission between the new base station and the original base station by establishing the E1 or T1 transmission line is not consistent with a technical development direction of IP converged communication in the future and fails to meet demands on the increasing data service.

According to the second prior art, an RNC or a higher-level base station is taken as a conversion bridge. This increases transmission bandwidth consumption of the RNC or the higher-level base station. In addition, the capacity of a transmission interface of the RNC and the higher-level base station is limited, making it difficult to expand the capacity of the whole base station in the future.

EP 1282320 A2 discloses that a cellular telephone network comprises peripheral branches and a central high-capacity data trunking region or network backbone. It concerns effective utilization of trunking capacity to provide backbone facilities for such a network. The network backbone comprises a satellite interface for a satellite connection and alternatively or additionally a backup backbone route. For example an Internet backbone route and a satellite backbone route may be used, one backing up the other.

US2007053364 A1 discloses that an apparatus is dedicated to processing E1 data frames in communications network equipment including at least one E1 line interface unit. The apparatus includes processor means adapted, on receiving from at least one E1 interface unit at least one El-type frame addressed to a given E1 destination port, to encapsulate that E1-type frame in a payload data field of an Ethernet frame in order to send it to an Ethernet destination port providing access to the given E1 destination port.

US7929907 B2 discloses a remote satellite modem, in conjunction with a mediation device
configuration propagates frames over a cellular backhaul link so as to preserve PRC traceability by receiving a frame based signal, in which the frame based signal conforms to a hub timing signal operable to demarcate frames in the frame based signal, and identifies a start of frame in the received frame based signal, such that the start of frame is independent of the symbol timing of the hub timing signal. In response to the start of frame, the modem generates a timing packet corresponding to a remote timing signal, and forwards the timing packet and the frame based signal, in which the timing packet is for decoding the frame based signal corresponding to the hub timing signal using the remote timing signal.

US2010098433 A1 discloses an Ethernet Passive Optical Network (EPON) system for clock transport. The system includes a reference clock configured to generate a frequency-reference signal, an optical line terminal (OLT) coupled to the reference clock, and an optical network unit (ONU). The OLT includes a clock generator configured to generate an OLT clock based on at least the frequency-reference signal. The ONU includes an optical transceiver, a clock recovery module, and a clock output mechanism. The optical transceiver is configured to transmit optical signals to and receive optical signals from the OLT. The clock-recovery module is configured to recover the frequency-reference signal from the received optical signals. The clock output mechanism is configured to output the recovered frequency-reference signal, thus facilitating transport of the frequency-reference signal over the EPON.

### SUMMARY OF THE INVENTION

The invention is related to a method according to claim 1, a first base station according to claim 7 and a second base station according to claim 10. Further embodiments of the invention are defined by the dependent claims.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.
FIG. 1 is a flowchart of a data transmission method according to Embodiment 1 of the present invention;
FIG. 2 is a schematic structural diagram of interconnection between a first base station and a second base station according to Embodiment 2 of the present invention;
FIG. 3 is a flowchart of a data transmission method according to Embodiment 2 of the present invention;
FIG. 4 is a flowchart of another data transmission method according to Embodiment 2 of the present invention;
FIG. 5 is a schematic structural diagram of a first base station according to Embodiment 3 of the present invention;
FIG. 6 is a schematic structural diagram of another first base station according to Embodiment 3 of the present invention;
FIG. 7 is a schematic structural diagram of another first base station according to Embodiment 3 of the present invention;
FIG. 8 is a schematic structural diagram of another first base station according to Embodiment 3 of the present invention;
FIG. 9 is a schematic structural diagram of a second base station according to Embodiment 4 of the present invention;
FIG. 10 is a schematic structural diagram of another second base station according to Embodiment 4 of the present invention;
FIG. 11 is a schematic structural diagram of another second base station according to Embodiment 4 of the present invention;
FIG. 12 is a schematic structural diagram of another second base station according to Embodiment 4 of the present invention; and
FIG. 13 is a schematic structural diagram of a data transmission system according to Embodiment 5.

### DETAILED DESCRIPTION OF THE EMBODIMENTS

To make the objectives, technical solutions, and advantages of the present invention more comprehensible, the following further describes the embodiments of the present invention in detail with reference to the accompanying drawings.

### Embodiment 1

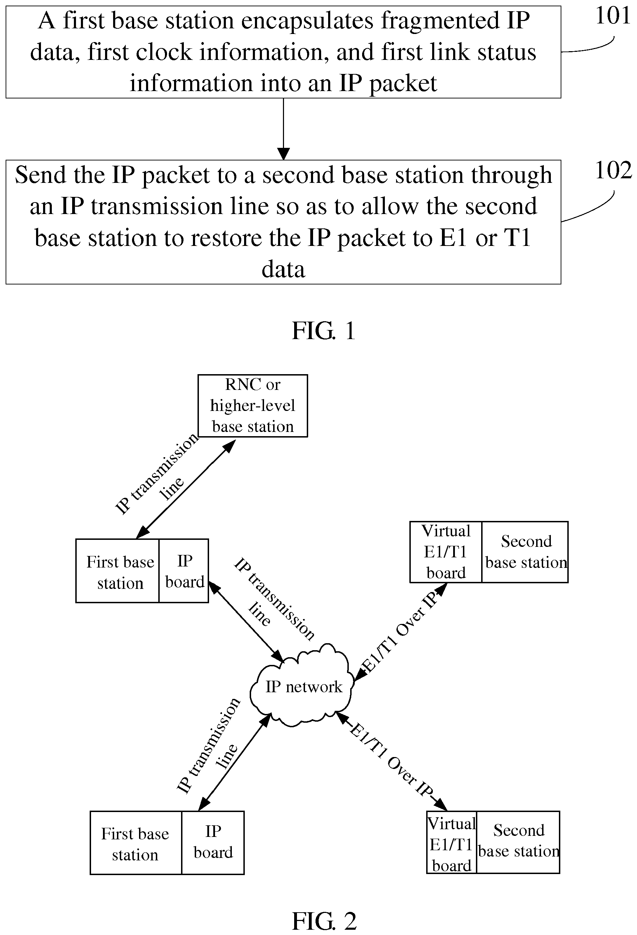

This embodiment of the present invention provides a data transmission method as shown in FIG. 1, including:
101: A first base station encapsulates fragmented IP data, first clock information, and first link status information into an IP packet.
102: Send the IP packet to a second base station through an IP transmission line so as to allow the second base station to restore the IP packet to E1 or T1 data.

According to the method provided in this embodiment of the present invention, a first base station virtualizes IP data into E1/T1 data and transmits the E1/T1 data to a second base station through an IP network, and the second base station restores the E1/T1 data to real E1/T1 data, thereby implementing a transparent conversion between a packet switching transmission mode and a TDM transmission mode. The first base station and the second base station are interconnected by using the IP network. This accommodates the evolution towards IP transmission, protects investment of an operator to the maximum extent, and implements a conversion without requiring an RNC or a higher-level base station, thereby reducing transmission bandwidth loss of the RNC or the higher-level base station.

### Embodiment 2

This embodiment of the present invention provides a data transmission method, where a first base station is a base station that uses an IP transmission line to transmit data, such as a 3G base station and a 4G base station; and a second base station is a base station that uses an E1 or a T1 transmission line to transmit data, such as a 2G base station. According to the method provided in this embodiment of the present invention, an IP interface board is added in the second base station in advance to offer an IP interface, so that the second base station is capable of transmitting an IP packet through an IP transmission line, thereby implementing interconnection between the first base station and the second base station. Further, the IP interface board added in the second base station connects to a virtual E1 board or a virtual T1 board, and the virtual E1 or T1 board connects to another processing module in the second base station, where the virtual E1 board and the virtual T1 board are configured to restore the IP packet to corresponding E1 or T1 data and process the E1 or T1 data into an IP packet. A schematic structural diagram of interconnection between the first base station and the second base station according to this embodiment of the present invention is illustrated in FIG. 2, where E1/T1 Over IP is a customized packet type.

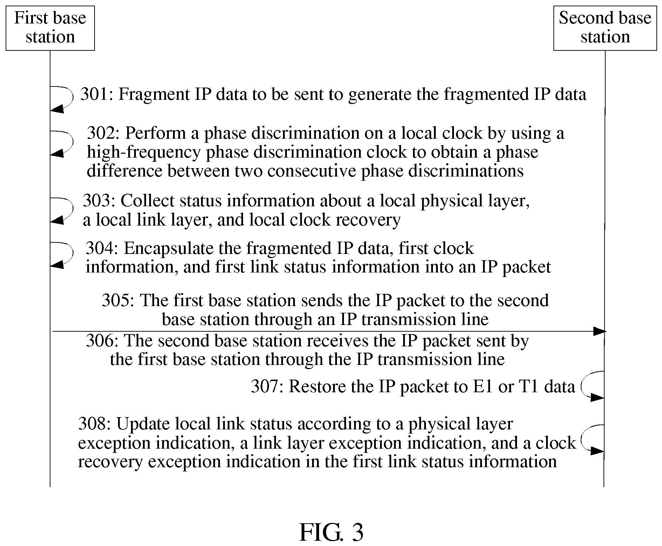

In one aspect, when the data transmission direction is from the first base station to the second base station as shown in FIG. 3, the method includes:
301: The first base station fragments IP data to be sent to generate fragmented IP data.

Specifically, an IP board of the first base station fragments the IP data to be sent into a fragment that is suitable for transmission through an E1 or a T1 transmission line. In TDM mode, a transmission rate is 8K frames per second, each frame through an E1 transmission line is divided into 32 timeslots, and each frame through a T1 transmission line is divided into 24 timeslots. Considering that control information of the E1 transmission line and that of the T1 transmission line separately occupy a bandwidth of 2 timeslots, a frame through the E1 transmission line transmits payloads of 30 timeslots (that is 30 bytes) at most, and a frame through the T1 transmission line transmits payloads of 22 timeslots (that is 22 bytes) at most. Therefore, when the first base station needs to send data to the second base station that uses an E1 transmission line, a size of the fragmented IP data cannot be greater than 30 bytes so as to allow the second base station to restore the fragmented IP data to E1 data; when the first base station needs to send data to the second base station that uses a T1 transmission line, a size of the fragmented IP data cannot be greater than 22 bytes so as to allow the second base station to restore the fragmented IP data to T1 data.

Further, the fragmented IP data may be numbered one by one according to a sequence of the fragments to facilitate the second base station in performing packet loss check according to the number.

302: The first base station performs a phase discrimination on a local clock by using a high-frequency phase discrimination clock to obtain a phase difference between two consecutive phase discriminations.

Specifically, under a certain phase sampling frequency, the IP board of the first base station performs two consecutive phase discriminations on a local clock by using the high-frequency phase discrimination clock to obtain phase information of the two consecutive phase discriminations, and performs subtraction on the phase information of the two consecutive phase discriminations, thereby obtaining the phase difference between the two consecutive phase discriminations.

Further, a frequency of the high-frequency phase discrimination clock, the phase sampling frequency, and the phase difference are taken as first clock information.

303: The first base station collects status information about a local physical layer, a local link layer, and local clock recovery.

Specifically, when a link status exception occurs on the first base station, for example, when a physical layer exception, a link layer exception, or a clock recovery exception occurs, exception information may be transmitted to the second base station, so that the second base station is instructed in the link exception. As a result, the second base station may learn link status of the first base station in time.

Further, a physical layer exception indication, a link layer exception indication, and a clock recovery exception indication are taken as first link status information.

It should be noted that there is no sequence for performing the preceding steps 301, 302, and 303.

304: The first base station encapsulates the fragmented IP data, the first clock information, and the first link status information into an IP packet.

Optionally, an encapsulation format of the fragmented IP data may be as follows, where bit width N of each field may be expanded separately according to the actual needs:

| | | | | | |
|---|---|---|---|---|---|
| Virtual E1/T1 subrack number (N1 bit) | Virtual E1/T1 board number (N2 bit) | Virtual E1/T1 link number (N3 bit) | Fragmented IP data number (N4 bit) | Fragmented IP data (N5 bit) | CRC on fragmented IP data |

The preceding virtual E1/T1 subrack number, virtual E1/T1 board number, and virtual E1/T1 link number are information about a virtual E1/T1 board of the second base station that is to interconnect with the first base station. The fragmented IP data is equivalent to an E1/T1 payload. CRC stands for cyclic redundancy check (Cyclic Redundancy Check).

Optionally, an encapsulation format of the first clock information may be as follows, where bit width X of each field may be expanded separately according to the actual needs:

| | | | | |
|---|---|---|---|---|
| Clock availability indication | Frequency of a high-frequency phase | Phase sampling frequency (X3 bit) | Phase difference (X4 bit) | Expansion (X5 bit) |
| (X1 bit) | discrimination clock (X2 bit) | | | |

Optionally, an encapsulation format of the first link status information may be as follows, where bit width M of each field may be expanded separately according to the actual needs:

| | | | |
|---|---|---|---|
| Physical layer exception indication (M1 bit) | Link layer exception indication (M2 bit) | Clock recovery exception indication (M3 bit) | Expansion (M4 bit) |

Still optionally, an encapsulation format of the whole IP packet may be as follows:

| | | | | | |
|---|---|---|---|---|---|
| Destination MAC address | Source MAC address | Ethernet packet type | IP packet header | IP payload | CRC encapsulation |

The IP payload is as follows:

| | | | | |
|---|---|---|---|---|
| UDP packet header | Customized packet type (E1/T1 Over IP) | Fragmented IP data Encapsulation | First clock information | First link status information |

305: The first base station sends the IP packet to the second base station through an IP transmission line.

Specifically, the first base station may send the IP packet to the second base station through the Ethernet.

306: The second base station receives the IP packet sent by the first base station through the IP transmission line.

Specifically, the second base station receives, by using the added IP interface board, the IP packet sent by the first base station and buffers it locally.

307: The second base station restores the IP packet to E1 or T1 data.

Specifically, the virtual E1 or T1 board of the second base station acquires first clock information and fragmented IP data from the IP packet, performs a phase discrimination on a local clock by using a high-frequency phase discrimination clock whose frequency is the same as that of the high-frequency phase discrimination clock in the first clock information to obtain a phase difference between two consecutive phase discriminations, where a phase sampling frequency for the phase discrimination is the same as the phase sampling frequency in the first clock information, and determines whether the phase difference obtained during the phase discrimination on the local clock is consistent with the phase difference in the first clock information. If they are consistent, it indicates that a clock frequency of the second base station is consistent with that of the first base station. If they are inconsistent, it indicates that the clock frequency of the second base station is inconsistent with that of the first base station, and the local clock is adjusted according to the phase difference in the first clock information; that is, the clock frequency of the second base station is adjusted according to the clock frequency of the first base station so as to allow the clock frequency of the second base station to keep consistent with that of the first base station. After the clock frequency of the second base station is consistent with that of the first base station, the second base station acquires a local clock and frame timing and restores the fragmented IP data to the E1 or T1 data according to the local clock and the frame timing. After the E1 or T1 data is restored, each processing module of the second base station is capable of identifying and using these E1 or T1 data.

The clock frequency is directly proportional to the phase difference between the two consecutive phase discriminations.

308: The second base station updates local link status according to the physical layer exception indication, the link layer exception indication, and the clock recovery exception indication in the first link status information.

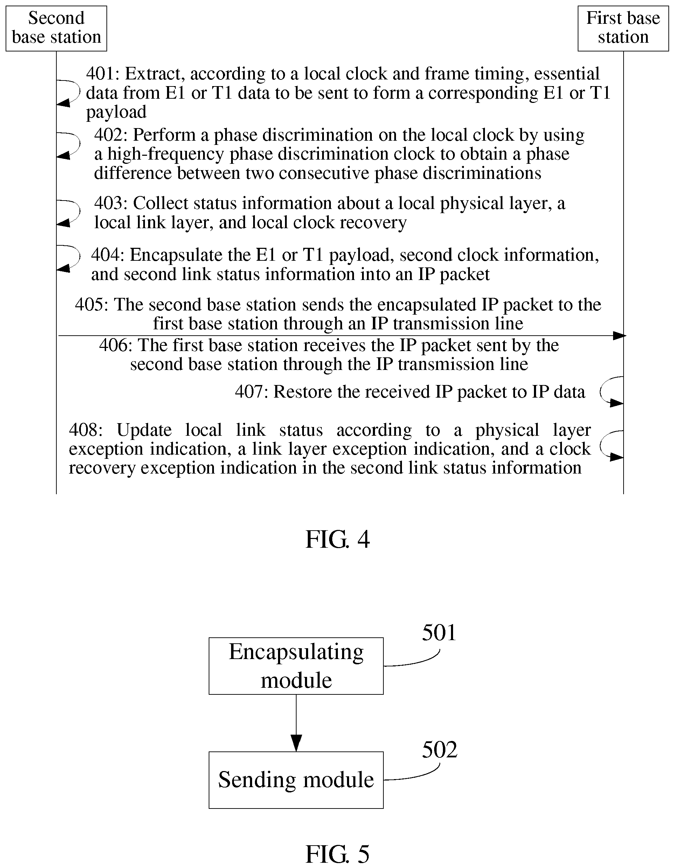

In another aspect, when the data transmission direction is from the second base station to the first base station as shown in FIG. 4, the method includes:
401: The second base station extracts, according to a local clock and frame timing, essential data from E1 or T1 data to be sent to form a corresponding E1 or T1 payload.

The method used on the second base station side in this step and subsequent steps may be specifically implemented by a virtual E1 or T1 board of the second base station.

402: The second base station performs a phase discrimination on the local clock by using a high-frequency phase discrimination clock to obtain a phase difference between two consecutive phase discriminations.

For specific phase discrimination procedure, refer to step 302. Details are not repeated herein.

Further, a frequency of the high-frequency phase discrimination clock used by the second base station, a phase sampling frequency, and the phase difference between the two consecutive phase discriminations of the second base station are taken as second clock information.

403: The second base station collects status information about a local physical layer, a local link layer, and local clock recovery.

A physical layer exception indication, a link layer exception indication, and a clock recovery exception indication of the second base station are taken as second link status information.

It should be noted that there is no sequence for performing the preceding steps 401, 402, and 403.

404: The second base station encapsulates the E1 or T1 payload, the second clock information, and the second link status information into an IP packet.

For encapsulation formats of the E1 or T1 payload, the second clock information, the second link status information, and the whole IP packet, refer to the content in step 304. That is, fragmented IP data in step 304 is replaced with an E1 or a T1 payload. Details are not repeated herein.

405: The second base station sends the encapsulated IP packet to the first base station through an IP transmission line.

406: The first base station receives the IP packet sent by the second base station through the IP transmission line.

407: The first base station restores the received IP packet to IP data.

Specifically, an IP board of the first base station acquires the second clock information and the E1 or T1 payload from the received IP packet, performs a phase discrimination on a local clock by using a high-frequency phase discrimination clock whose frequency is the same as that of the high-frequency phase discrimination clock in the second clock information to obtain a phase difference between two consecutive phase discriminations, where a phase sampling frequency for the phase discrimination is the same as the phase sampling frequency in the second clock information, and determines whether the phase difference obtained during the phase discrimination on the local clock is consistent with the phase difference in the second clock information. If they are consistent, it indicates that a clock frequency of the first base station is consistent with that of the second base station. If they are inconsistent, it indicates that the clock frequency of the first base station is inconsistent with that of the second base station, and the local clock is adjusted according to the phase difference in the second clock information; that is, the clock frequency of the first base station is adjusted according to the clock frequency of the second base station so as to allow the clock frequency of the first base station to keep consistent with that of the second base station. After the clock frequency of the first base station is consistent with that of the second base station, the first base station acquires the local clock and frame timing and restores the E1 or T1 payload to the IP data according to the local clock and the frame timing. After the IP data is restored, each processing module of the first base station is capable of identifying and using these IP data.

408: The first base station updates local link status according to the physical layer exception indication, the link layer exception indication, and the clock recovery exception indication in the second link status information.

It should be noted that the method provided in this embodiment of the present invention may be used between any device that has an E1/T1 interface and a device that has an IP interface to implement interconnection.

According to the method provided in this embodiment of the present invention, an IP network is established between a first base station and a second base station; in one aspect, the first base station virtualizes IP data into E1/T1 data and transmits the E1/T1 data to the second base station through the IP network, and the second base station restores the E1/T1 data to real E1/T1 data; in another aspect, the second base station encapsulates the E1/T1 data and related information into an IP packet and transmits the IP packet to the first base station through the IP network, and the first base station restores the E1/T1 data and the related information to real IP data. In this case, a transparent conversion between a packet switching transmission mode and a TDM transmission mode is implemented. According to this technical solution, IP transmission is performed on the E1/T1 data, and transmission sharing between the second base station and the first base station can be implemented. This accommodates the evolution towards IP transmission and protects investment of an operator to the maximum extent. In this technical solution, the first base station and the second base station can be interconnected directly without requiring an RNC or a higher-level base station to implement a conversion, thereby reducing transmission bandwidth loss of the RNC or the higher-level base station. In addition, this technical solution implements the IP transmission on the E1/T1 data and provides higher transmission bandwidth than a solution in the prior art, so that demands on a data service in the future can be met. Further in this technical solution, a phase discrimination method is used, thereby lowering a clock requirement on a transmission network between the base stations and reducing maintenance costs.

### Embodiment 3

This embodiment of the present invention provides a first base station that is capable of implementing the method steps on a first base station side in Embodiment 2. In this embodiment of the present invention, the first base station refers to a base station that uses an IP transmission line to transmit data, such as a 3G base station and a 4G base station; and a second base station refers to a base station that uses an E1 or a T1 transmission line to transmit data, such as a 2G base station. As shown in FIG. 5, the first base station includes:
an encapsulating module 501, configured to encapsulate fragmented IP data, first clock information, and first link status information into an IP packet; and
a sending module 502, configured to send the IP packet encapsulated by the encapsulating module 501 to the second base station through an IP transmission line so as to allow the second base station to restore the IP packet to E1 or T1 data.

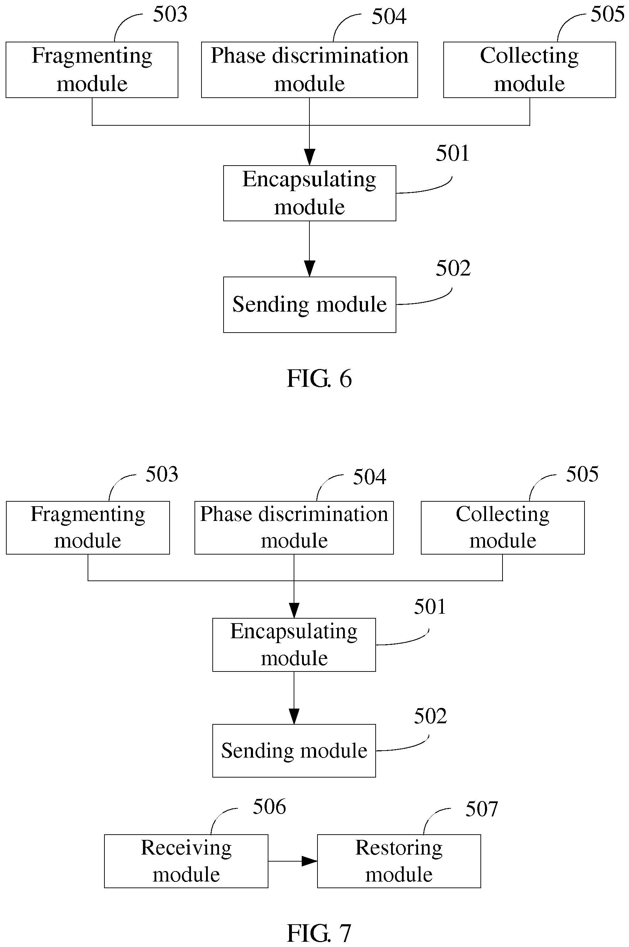

Further, as shown in FIG. 6, the first base station further includes:
a fragmenting module 503, configured to fragment IP data to be sent before the encapsulating module 501 performs the encapsulation so as to generate the fragmented IP data;
a phase discrimination module 504, configured to perform a phase discrimination on a local clock by using a high-frequency phase discrimination clock before the encapsulating module 501 performs the encapsulation to obtain a phase difference between two consecutive phase discriminations, and take a frequency of the high-frequency phase discrimination clock, a phase sampling frequency, and the phase difference as the first clock information; and
a collecting module 505, configured to collect status information about a local physical layer, a local link layer, and local clock recovery before the encapsulating module 501 performs the encapsulation, and take a physical layer exception indication, a link layer exception indication, and a clock recovery exception indication as the first link status information.

Further, as shown in FIG. 7, the first base station further includes:
a receiving module 506, configured to receive an IP packet sent by the second base station through an IP transmission line, where the received IP packet includes an E1 or a T1 payload, second clock information, and second link status information; and
a restoring module 507, configured to restore the IP packet received by the receiving module 506 to IP data.

The restoring module 507 is specifically configured to: acquire the second clock information from the received IP packet, and the second clock information includes a frequency of a high-frequency phase discrimination clock, a phase sampling frequency, and a phase difference; perform a phase discrimination on a local clock by using a high-frequency phase discrimination clock whose frequency is the same as that of the high-frequency phase discrimination clock to obtain a phase difference between two consecutive phase discriminations, and the phase sampling frequency for the phase discrimination is the same as the phase sampling frequency in the second clock information; determine whether the phase difference obtained during the phase discrimination on the local clock is consistent with the phase difference in the second clock information; and, if they are inconsistent, adjust the local clock according to the phase difference in the second clock information; acquire a local clock and frame timing; and restore the E1 or T1 payload to the IP data according to the local clock and the frame timing.

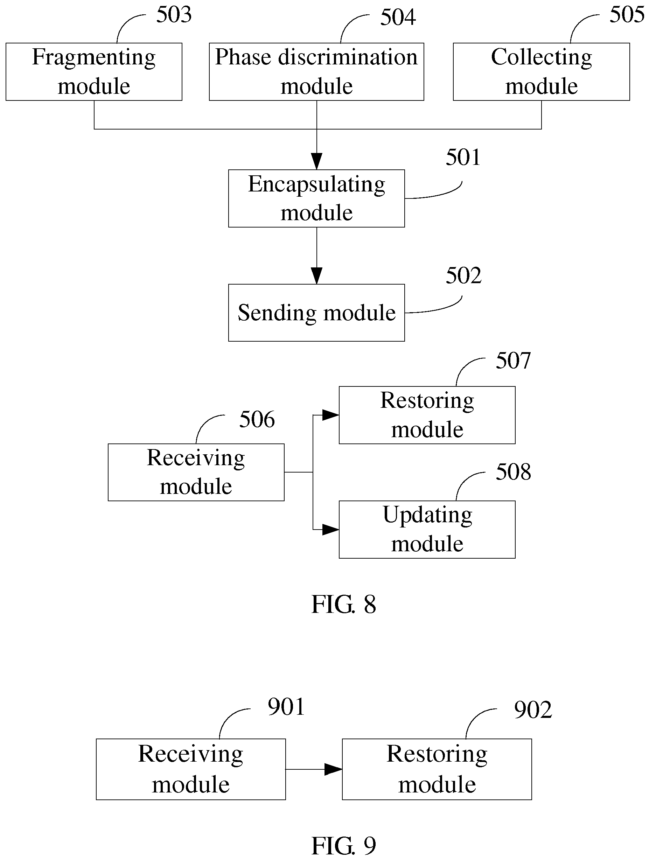

Further, as shown in FIG. 8, the first base station further includes:
an updating module 508, configured to update local link status according to a physical layer exception indication, a link layer exception indication, and a clock recovery exception indication in the second link status information after the receiving module 506 receives the IP packet sent by the second base station through the IP transmission line.

The first base station provided in this embodiment of the present invention virtualizes IP data into E1/T1 data and transmits the E1/T1 data to a second base station through an IP network so as to allow the second base station to restore the E1/T1 data to real E1/T1 data; in another aspect, receives an IP packet encapsulated from the E1/T1 data and related information sent by the second base station through the IP network and restores the E1/T1 data and the related information to real IP data, thereby implementing a transparent conversion between a packet switching transmission mode and a TDM transmission mode. According to this technical solution, IP transmission is performed on the E1/T1 data, and transmission sharing between the second base station and the first base station can be implemented. This accommodates the evolution towards IP transmission and protects investment of an operator to the maximum extent. In this technical solution, the first base station and the second base station can be interconnected directly without requiring an RNC or a higher-level base station to implement a conversion, thereby reducing transmission bandwidth loss of the RNC or the higher-level base station. In addition, this technical solution implements the IP transmission on the E1/T1 data and provides higher transmission bandwidth than a solution in the prior art, so that demands on a data service in the future can be met. Further in this technical solution, a phase discrimination method is used, thereby lowering a clock requirement on a transmission network between the base stations and reducing maintenance costs.

### Embodiment 4

This embodiment of the present invention provides a second base station that is capable of implementing the method steps on a second base station side in Embodiment 2. In this embodiment of the present invention, the second base station refers to a base station that uses an E1 or a T1 transmission line to transmit data, such as a 2G base station; and a first base station refers to a base station that uses an IP transmission line to transmit data, such as a 3G base station and a 4G base station. As shown in FIG. 9, the second base station includes:
a receiving module 901, configured to receive an IP packet sent by the first base station through an IP transmission line, where the IP packet includes fragmented IP data, first clock information, and first link status information; and
a restoring module 902, configured to restore the IP packet to E1 or T1 data.

The restoring module 902 is specifically configured to: acquire the first clock information from the IP packet, and the first clock information includes a frequency of a high-frequency phase discrimination clock, a phase sampling frequency, and a phase difference; perform a phase discrimination on a local clock by using a high-frequency phase discrimination clock whose frequency is the same as that of the high-frequency phase discrimination clock to obtain a phase difference between two consecutive phase discriminations, and a phase sampling frequency for the phase discrimination is the same as the phase sampling frequency in the first clock information; determine whether the phase difference obtained during the phase discrimination on the local clock is consistent with the phase difference in the first clock information; and, if they are inconsistent, adjust the local clock according to the phase difference in the first clock information; acquire a local clock and frame timing; and restore the fragmented IP data to the E1 or T1 data according to the local clock and the frame timing.

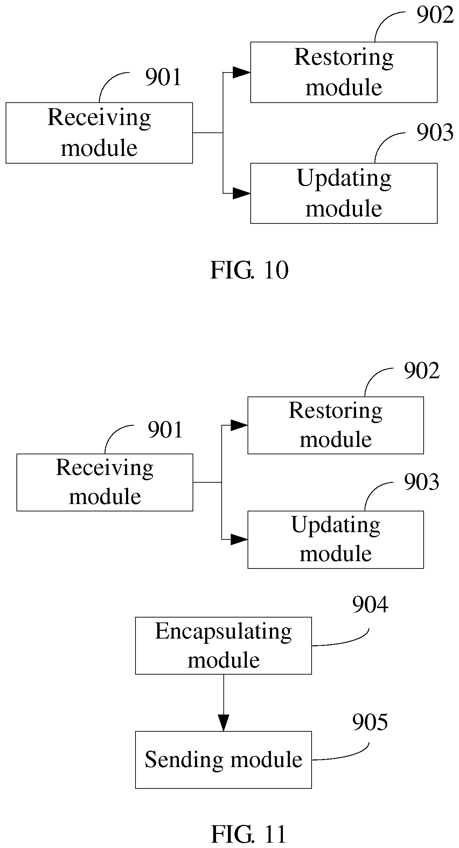

Further, as shown in FIG. 10, the second base station further includes:
an updating module 903, configured to update local link status according to a physical layer exception indication, a link layer exception indication, and a clock recovery exception indication in the first link status information after the receiving module 901 receives the IP packet sent by the first base station through the IP transmission line.

Further, as shown in FIG. 11, the second base station further includes:
an encapsulating module 904, configured to encapsulate an E1 or a T1 payload, second clock information, and second link status information into an IP packet; and
a sending module 905, configured to send the IP packet encapsulated by the encapsulating module 904 to the first base station through an IP transmission line so as to allow the first base station to restore the received IP packet to IP data.

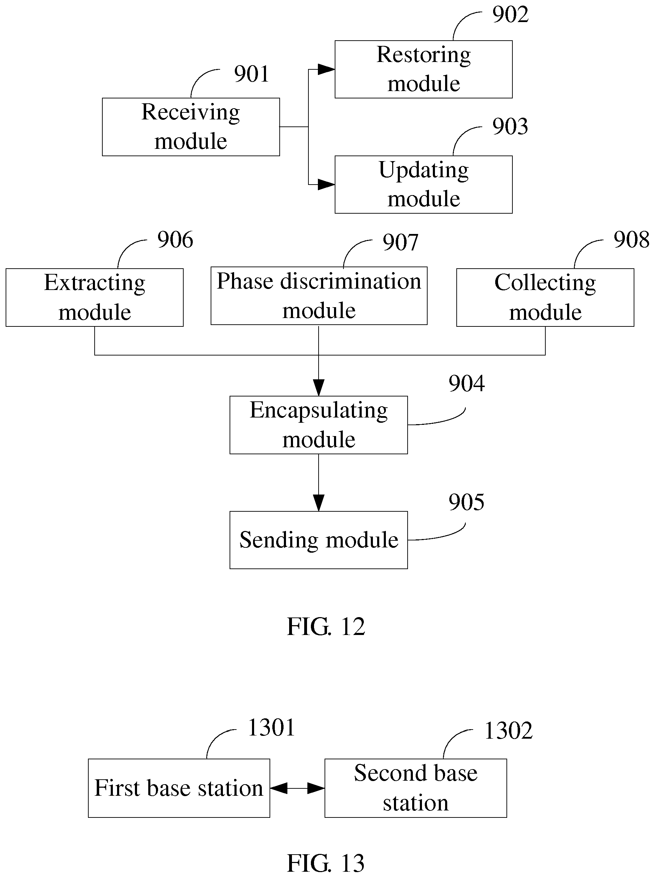

Further, as shown in FIG. 12, the second base station further includes:
an extracting module 906, configured to extract, according to the local clock and the frame timing, essential data from the E1 or T1 data to be sent before the encapsulating module 904 performs the encapsulation to form a corresponding E1 or T1 payload;
a phase discrimination module 907, configured to perform a phase discrimination on the local clock by using the high-frequency phase discrimination clock before the encapsulating module 904 performs the encapsulation to obtain the phase difference between two consecutive phase discriminations, and take the frequency of the high-frequency phase discrimination clock, the phase sampling frequency, and the phase difference as the second clock information; and
a collecting module 908, configured to collect status information about a local physical layer, a local link layer, and local clock recovery before the encapsulating module 904 performs the encapsulation, and take a physical layer exception indication, a link layer exception indication, and a clock recovery exception indication as the second link status information.

The second base station provided in this embodiment of the present invention receives an IP packet sent by a first base station through an IP network, restores the IP packet to E1/T1 data, in another aspect, encapsulates the E1/T1 data and related information into an IP packet, and transmits the IP packet through the IP network so as to allow the first base station to restore the E1/T1 data and the related information to real IP data, thereby implementing a transparent conversion between a packet switching transmission mode and a TDM transmission mode. According to this technical solution, IP transmission is performed on the E1/T1 data, and transmission sharing between the second base station and the first base station can be implemented. This accommodates the evolution towards IP transmission and protects investment of an operator to the maximum extent. In this technical solution, the first base station and the second base station can be interconnected directly without requiring an RNC or a higher-level base station to implement a conversion, thereby reducing transmission bandwidth loss of the RNC or the higher-level base station. In addition, this technical solution implements the IP transmission on the E1/T1 data and provides higher transmission bandwidth than a solution in the prior art, so that demands on a data service in the future can be met. Further in this technical solution, a phase discrimination method is used, thereby lowering a clock requirement on a transmission network between the base stations and reducing maintenance costs.

### Embodiment 5

This embodiment of the present invention provides a data transmission system as shown in FIG. 13, including a first base station 1301 and a second base station 1302.

The first base station 1301 is a first base station provided in Embodiment 3.

The second base station 1302 is a second base station provided in Embodiment 4.

In conclusion, in this embodiment of the present invention, an IP network is established between the first base station and the second base station; in one aspect, the first base station virtualizes IP data into E1/T1 data and transmits the E1/T1 data to the second base station through the IP network, and the second base station restores the E1/T1 data to real E1/T1 data; in another aspect, the second base station encapsulates the E1/T1 data and related information into an IP packet and transmits the IP packet to the first base station through the IP network, and the first base station restores the E1/T1 data and the related information to real IP data, thereby implementing a transparent conversion between a packet switching transmission mode and a TDM transmission mode. According to this technical solution, IP transmission is performed on the E1/T1 data, and transmission sharing between the second base station and the first base station can be implemented. This accommodates the evolution towards IP transmission and protects investment of an operator to the maximum extent. In this technical solution, the first base station and the second base station can be interconnected directly without requiring an RNC or a higher-level base station to implement a conversion, thereby reducing transmission bandwidth loss of the RNC or the higher-level base station. In addition, this technical solution implements the IP transmission on the E1/T1 data and provides higher transmission bandwidth than a solution in the prior art, so that demands on a data service in the future can be met. Further in this technical solution, a phase discrimination method is used, thereby lowering a clock requirement on a transmission network between the base stations and reducing maintenance costs.

It should be noted that when data is transmitted between a first base station and a second base station provided in the preceding embodiment, division of each preceding functional module is merely described as an example. In practical application, the functions may be assigned to different functional modules for implementation as required. That is, the internal structures of the first base station and the second base station are divided into different functional modules to implement all or part of the preceding described functions. In addition, the first base station and the second base station provided in the preceding embodiment and the data transmission method embodiments belong to a same concept. For specific implementation procedures, refer to the method embodiments. Details are not repeated herein.

The sequence numbers of the preceding embodiments of the present invention are merely for description purpose but do not indicate the preference of the embodiments.

Persons of ordinary skill in the art may understand that all or part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are merely exemplary embodiments of the present invention, but are not intended to limit the present invention.

## Claims

1. A data transmission method, comprising:
fragmenting (301), by a first base station, Internet Protocol, IP, data to be sent into fragments that are suitable for transmission through an E1 or T1 transmission line so as to generate fragmented IP data;
obtaining (302), by the first base station, a first phase difference between two consecutive phase discriminations by performing a phase discrimination on a first local clock by using a first high-frequency phase discrimination clock and under a first phase sampling frequency, wherein a frequency of the first high-frequency phase discrimination clock, the first phase sampling frequency, and the obtained first phase difference are included in first clock information;
encapsulating (101, 304), by the first base station, the fragmented IP data and the first clock information into an IP packet; and
sending (102, 305), by the first base station, the IP packet to a second base station through an IP transmission line, wherein the fragmented IP data and the first clock information in the IP packet are used for the second base station to restore the IP packet to E1 or T1 data.

2. The method according to claim 1, further comprising:
encapsulating, by the first base station, first link status information into the IP packet.

3. The method according to claim 2, before encapsulating, by the first base station, first link status information into the IP packet, further comprising:
collecting (303) status information about at least one of a local physical layer, a local link layer, and local clock recovery, wherein at least one of a physical layer exception indication, a link layer exception indication, and a clock recovery exception indication, obtained through the collecting, are included in the first link status information.

4. The method according to any one of claims 1 to 3, further comprising:
receiving (406), by the first base station, an IP packet sent by the second base station through the IP transmission line, wherein the received IP packet comprises an E1 or a T1 payload and second clock information; and
restoring (407) the received IP packet to IP data.

5. The method according to claim 4, wherein the restoring the received IP packet to IP data comprises:
acquiring the second clock information from the received IP packet, wherein the second clock information comprises a frequency of a second high-frequency phase discrimination clock, a second phase sampling frequency, and a second phase difference;
obtaining a third phase difference between two consecutive phase discriminations by performing a phase discrimination on a second local clock by using a third high-frequency phase discrimination clock whose frequency is the same as that of the second high-frequency phase discrimination clock and under a third phase sampling frequency which is the same as the second phase sampling frequency in the second clock information;
determining whether the third phase difference obtained during the phase discrimination on the second local clock is consistent with the second phase difference in the second clock information and, if they are inconsistent, adjusting the second local clock according to the second phase difference in the second clock information;
restoring the E1 or T1 payload to IP data according to the adjusted local clock.

6. The method according to claim 4 or claim 5, wherein the received IP packet further comprises second link status information and after the receiving, by the first base station, an IP packet sent by the second base station through the IP transmission line, the method further comprises:
updating (408) local link status according to a physical layer exception indication, a link layer exception indication, and a clock recovery exception indication in the second link status information.

7. A first base station, comprising:
a fragmenting module (503), configured to fragment Internet Protocol, IP, data to be sent into fragments that are suitable for transmission through an E1 or T1 transmission line so as to generate fragmented IP data;
a phase discrimination module (504), configured to obtain a first phase difference between two consecutive phase discrimination by performing a phase discrimination on a first local clock by using a first high-frequency phase discrimination clock before the encapsulating module performs the encapsulation and under a first phase sampling frequency, wherein a frequency of the first high-frequency phase discrimination clock, the first phase sampling frequency, and the obtained first phase difference are included in first clock information;
an encapsulating module (501), configured to encapsulate the fragmented IP data and the first clock information into an IP packet; and
a sending module (502), configured to send the IP packet encapsulated by the encapsulating module to a second base station through an IP transmission line, wherein the fragmented IP data and the first clock information in the IP packet are used for the second base station to restore the IP packet to E1 or T1 data.

8. The first base station according to claim 7, further comprising:
a receiving module (506), configured to receive an IP packet sent by the second base station through the IP transmission line, wherein the received IP packet comprises an E1 or a T1 payload and second clock information; and
a restoring module (507), configured to restore the IP packet received by the receiving module to IP data.

9. The first base station according to claim 8, wherein the restoring module (507) is specifically configured to: acquire the second clock information from the received IP packet, and the second clock information comprises a frequency of a second high-frequency phase discrimination clock, a second phase sampling frequency, and a second phase difference; obtain a third phase difference between two consecutive phase discriminations by performing a phase discrimination on a third local clock by using a third high-frequency phase discrimination clock whose frequency is the same as that of the second high-frequency phase discrimination clock and under a third phase sampling frequency for the phase discrimination which is the same as the second phase sampling frequency in the second clock information; determine whether the third phase difference obtained during the phase discrimination on the second local clock is consistent with the second phase difference in the second clock information; and, if they are inconsistent, adjust the second local clock according to the second phase difference in the second clock information; and restore the E1 or T1 payload to the IP data according to the adjusted local clock.

10. A second base station, comprising:
a receiving module (901), configured to receive an Internet Protocol, IP, packet sent by a first base station through an IP transmission line, wherein the IP packet comprises fragmented IP data that are suitable for transmission through an E1 or T1 transmission line and first clock information; and
a restoring module (902), configured to restore the first IP packet to E1 or T1 data;
wherein the restoring module (902) is specifically configured to: acquire the first clock information from the IP packet, and the first clock information comprises a frequency of a first high-frequency phase discrimination clock, a first phase sampling frequency, and a first phase difference; obtain a fourth phase difference between two consecutive phase discriminations by performing a phase discrimination on a fourth local clock by using a fourth high-frequency phase discrimination clock whose frequency is the same as that of the first high-frequency phase discrimination clock and under a fourth phase sampling frequency which is the same as the first phase sampling frequency in the first clock information; determine whether the fourth phase difference obtained during the phase discrimination on the second local clock is consistent with the first phase difference in the first clock information and, if they are inconsistent, adjust the fourth local clock according to the first phase difference in the first clock information; and restore the fragmented IP data to the E1 or T1 data according to the adjusted fourth local clock.

11. The second base station according to claim 10, further comprising:
an encapsulating module (904), configured to encapsulate an E1 or a T1 payload and second clock information into an IP packet; and
a sending module (905), configured to send the IP packet encapsulated by the encapsulating module (904) to the first base station through the IP transmission line, wherein the E1 or T1 payload and the second clock information are used for the first base station to restore the received IP packet to IP data.

12. The second base station according to claim 11, further comprising:
an extracting module (906), configured to extract data from the E1 or T1 data to be sent before the encapsulating module performs the encapsulation to form a corresponding E1 or T1 payload; and
a phase discrimination module (907), configured to obtain a second phase difference between two consecutive phase discriminations by performing a phase discrimination on a second local clock by using a second high-frequency phase discrimination clock before the encapsulating module performs the encapsulation and under a second phase sampling frequency, wherein a frequency of the second high-frequency phase discrimination clock, the second phase sampling frequency, and the phase sampling frequency phase difference are included in the second clock information.

## Patentansprüche

1. Datenübertragungsverfahren, umfassend:
Fragmentieren (301), durch eine erste Basisstation, von zu sendenden Internetprotokoll-, IP-, Daten, zu Fragmenten, die für Übertragung durch eine E1- oder T1-Übertragungsleitung geeignet sind, um fragmentierte IP-Daten zu erzeugen;
Erhalten (302), durch die erste Basisstation, einer ersten Phasendifferenz zwischen zwei konsekutiven Phasendiskriminierungen durch Ausführen einer Phasendiskriminierung auf einem ersten lokalen Takt durch Verwenden eines ersten Hochfrequenz-Phasendiskriminierungstakts und unter einer ersten Phasenabtastfrequenz, wobei eine Frequenz des ersten Hochfrequenz-Phasendiskriminierungstakts, die erste Phasenabtastfrequenz und die erhaltene erste Phasendifferenz in den ersten Taktinformationen enthalten sind;
Kapseln (101, 304), durch die erste Basisstation, der fragmentierten IP-Daten und der ersten Taktinformationen in ein IP-Paket; und
Senden (102, 305), durch die erste Basisstation, des IP-Pakets an eine zweite Basisstation durch eine IP-Übertragungsleitung,
wobei die fragmentierten IP-Daten und die ersten Taktinformationen in dem IP-Paket für die zweite Basisstation genutzt werden, um das IP-Paket zu El- oder T1-Daten wiederherzustellen.

2. Verfahren nach Anspruch 1, ferner umfassend:
Kapseln, durch die erste Basisstation, erster Verbindungsstatusinformationen in das IP-Paket.

3. Verfahren nach Anspruch 2, vor dem Kapseln, durch die erste Basisstation, erster Verbindungsstatusinformationen in das IP-Paket, ferner umfassend:
Sammeln (303) von Statusinformationen über mindestens eine von einer lokalen Bitübertragungsschicht, einer lokalen Verbindungsschicht und lokaler Taktwiederherstellung, wobei mindestens eine von einer Bitübertragungsschicht-Ausnahme-Angabe, einer Verbindungsschicht-Ausnahme-Angabe und einer Taktwiederherstellungs-Ausnahme-Angabe, die durch das Sammeln erhalten wurden, in den ersten Verbindungsstatusinformationen enthalten sind.

4. Verfahren nach einem der Ansprüche 1 bis 3, ferner umfassend:
Empfangen (406), durch die erste Basisstation, eines IP-Pakets, das von der zweiten Basisstation durch die IP-Übertragungsleitung gesendet wurde, wobei das empfangene IP-Paket eine El- oder eine T1-Nutzlast und zweite Taktinformationen umfasst; und
Wiederherstellen (407) des empfangenen IP-Pakets zu IP-Daten.

5. Verfahren nach Anspruch 4, wobei das Wiederherstellen des empfangenen IP-Pakets zu IP-Daten Folgendes umfasst:
Erfassen der zweiten Taktinformationen aus dem empfangenen IP-Paket, wobei die zweiten Taktinformationen eine Frequenz eines zweiten Hochfrequenz-Phasendiskriminierungstakts, eine zweite Phasenabtastfrequenz und eine zweite Phasendifferenz umfassen;
Erhalten einer dritten Phasendifferenz zwischen zwei konsekutiven Phasendiskriminierungen durch Ausführen einer Phasendiskriminierung auf einem zweiten lokalen Takt durch Verwenden eines dritten Hochfrequenz-Phasendiskriminierungstakts, dessen Frequenz dieselbe wie jene des zweiten Hochfrequenz-Phasendiskriminierungstakts ist, und unter einer dritten Phasenabtastfrequenz, die dieselbe wie die zweite Phasenabtastfrequenz in den zweiten Taktinformationen ist;
Bestimmen, ob die dritte Phasendifferenz, die während der Phasendiskriminierung auf dem zweiten lokalen Takt erhalten wurde, mit der zweiten Phasendifferenz in den zweiten Taktinformationen konsistent ist, und wenn sie inkonsistent sind, Anpassen des zweiten lokalen Takts entsprechend der zweiten Phasendifferenz in den zweiten Taktinformationen;
Wiederherstellen der El- oder T1-Nutzlast zu IP-Daten entsprechend dem angepassten lokalen Takt.

6. Verfahren nach Anspruch 4 oder Anspruch 5, wobei das empfangene IP-Paket ferner zweite Verbindungsstatusinformationen umfasst und nach dem Empfangen, durch die erste Basisstation, eines IP-Pakets, das von der zweiten Basisstation durch die IP-Übertragungsleitung gesendet wurde, das Verfahren ferner Folgendes umfasst:
Aktualisieren (408) eines lokalen Verbindungsstatus entsprechend einer Bitübertragungsschicht-Ausnahme-Angabe, einer Verbindungsschicht-Ausnahme-Angabe und einer Taktwiederherstellungs-Ausnahme-Angabe in den zweiten Verbindungsstatusinformationen.

7. Erste Basisstation, umfassend:
ein Fragmentierungsmodul (503), das konfiguriert ist, zu sendende Internetprotokoll-, IP-, Daten, zu Fragmenten zu fragmentieren, die für Übertragung durch eine E1- oder T1-Übertragungsleitung geeignet sind, um fragmentierte IP-Daten zu erzeugen;
ein Phasendiskriminierungsmodul (504), das konfiguriert ist, eine erste Phasendifferenz zwischen zwei konsekutiven Phasendiskriminierungen durch Ausführen einer Phasendiskriminierung auf einem ersten lokalen Takt durch Verwenden eines ersten Hochfrequenz-Phasendiskriminierungstakts, bevor das Kapselungsmodul die Kapselung vornimmt, und unter einer ersten Phasenabtastfrequenz zu erhalten, wobei eine Frequenz des ersten Hochfrequenz-Phasendiskriminierungstakts, die erste Phasenabtastfrequenz und die erhaltene erste Phasendifferenz in den ersten Taktinformationen enthalten sind;
ein Kapselungsmodul (501), das konfiguriert ist, die fragmentierten IP-Daten und die ersten Taktinformationen in ein IP-Paket zu kapseln; und
ein Sendemodul (502), das konfiguriert ist, das IP-Paket, das von dem Kapselungsmodul gekapselt wurde, an eine zweite Basisstation durch eine IP-Übertragungsleitung zu senden, wobei die fragmentierten IP-Daten und die ersten Taktinformationen in dem IP-Paket für die zweite Basisstation genutzt werden, um das IP-Paket zu E1- oder T1-Daten wiederherzustellen.

8. Erste Basisstation nach Anspruch 7, ferner umfassend:
ein Empfangsmodul (506), das konfiguriert ist, ein IP-Paket zu empfangen, das von der zweiten Basisstation durch die IP-Übertragungsleitung gesendet wurde, wobei das empfangene IP-Paket eine E1- oder eine T1-Nutzlast und zweite Taktinformationen umfasst; und
ein Wiederherstellungsmodul (507), das konfiguriert ist, das von dem Empfangsmodul empfangene IP-Paket zu IP-Daten wiederherzustellen.

9. Erste Basisstation nach Anspruch 8, wobei das Wiederherstellungsmodul (507) im Speziellen konfiguriert ist: die zweiten Taktinformationen aus dem empfangenen IP-Paket zu erfassen und die zweiten Taktinformationen eine Frequenz eines zweiten Hochfrequenz-Phasendiskriminierungstakts, eine zweite Phasenabtastfrequenz und eine zweite Phasendifferenz umfassen; eine dritte Phasendifferenz zwischen zwei konsekutiven Phasendiskriminierungen durch Ausführen einer Phasendiskriminierung auf einem dritten lokalen Takt durch Verwenden eines dritten Hochfrequenz-Phasendiskriminierungstakts, dessen Frequenz dieselbe wie jene des zweiten Hochfrequenz-Phasendiskriminierungstakts ist, und unter einer dritten Phasenabtastfrequenz für die Phasendiskriminierung zu erhalten, die dieselbe wie die zweite Phasenabtastfrequenz in den zweiten Taktinformationen ist; zu bestimmen, ob die dritte Phasendifferenz, die während der Phasendiskriminierung auf dem zweiten lokalen Takt erhalten wurde, mit der zweiten Phasendifferenz in den zweiten Taktinformationen konsistent ist; und, wenn sie inkonsistent sind, den zweiten lokalen Takt entsprechend der zweiten Phasendifferenz in den zweiten Taktinformationen anzupassen; und die E1- oder T1-Nutzlast entsprechend dem angepassten lokalen Takt zu den IP-Daten wiederherzustellen.

10. Zweite Basisstation, umfassend:
ein Empfangsmodul (901), das konfiguriert ist, ein Internetprotokoll-, IP-, Paket zu empfangen, das von einer ersten Basisstation durch eine IP-Übertragungsleitung gesendet wurde, wobei das IP-Paket fragmentierte IP-Daten, die für Übertragung durch eine El- oder T1 Übertragungsleitung geeignet sind, und erste Taktinformationen umfasst; und
ein Wiederherstellungsmodul (902), das konfiguriert ist, das erste IP-Paket zu E1- oder T1-Daten wiederherzustellen;
wobei das Wiederherstellungsmodul (902) im Speziellen konfiguriert ist: die ersten Taktinformationen aus dem IP-Paket zu erfassen, und die ersten Taktinformationen eine Frequenz eines ersten Hochfrequenz-Phasendiskriminierungstakts, eine erste Phasenabtastfrequenz und eine erste Phasendifferenz umfassen; eine vierte Phasendifferenz zwischen zwei konsekutiven Phasendiskriminierungen durch Ausführen einer Phasendiskriminierung auf einem vierten lokalen Takt durch Verwenden eines vierten Hochfrequenz-Phasendiskriminierungstakts, dessen Frequenz dieselbe wie jene des ersten Hochfrequenz-Phasendiskriminierungstakts ist, und unter einer vierten Phasenabtastfrequenz zu erhalten, die dieselbe wie die erste Phasenabtastfrequenz in den ersten Taktinformationen ist; zu bestimmen, ob die vierte Phasendifferenz, die während der Phasendiskriminierung auf dem zweiten lokalen Takt erhalten wurde, mit der ersten Phasendifferenz in den ersten Taktinformationen konsistent ist und, wenn sie inkonsistent sind, den vierten lokalen Takt entsprechend der ersten Phasendifferenz in den ersten Taktinformationen anzupassen; und die fragmentierten IP-Daten entsprechend dem angepassten vierten lokalen Takt zu den El- oder T1-Daten wiederherzustellen.

11. Zweite Basisstation nach Anspruch 10, ferner umfassend:
ein Kapselungsmodul (904), das konfiguriert ist, eine El- oder eine Tl-Nutzlast und zweite Taktinformationen in ein IP-Paket zu kapseln; und
ein Sendemodul (905), das konfiguriert ist, das IP-Paket, das von dem Kapselungsmodul (904) gekapselt wurde, an die erste Basisstation durch die IP-Übertragungsleitung zu senden, wobei die El- oder Tl-Nutzlast und die zweiten Taktinformationen für die erste Basisstation genutzt werden, um das empfangene IP-Paket zu IP-Daten wiederherzustellen.

12. Zweite Basisstation nach Anspruch 11, ferner umfassend:
ein Extraktionsmodul (906), das konfiguriert ist, Daten aus den zu sendenden E1- oder T1-Daten zu extrahieren, bevor das Kapselungsmodul die Kapselung vornimmt, um eine entsprechende El- oder Tl-Nutzlast zu bilden; und
ein Phasendiskriminierungsmodul (907), das konfiguriert ist, eine zweite Phasendifferenz zwischen zwei konsekutiven Phasendiskriminierungen durch Ausführen einer Phasendiskriminierung auf einem zweiten lokalen Takt durch Verwenden eines zweiten Hochfrequenz-Phasendiskriminierungstakts, bevor das Kapselungsmodul die Kapselung vornimmt, und unter einer zweiten Phasenabtastfrequenz zu erhalten, wobei eine Frequenz des zweiten Hochfrequenz-Phasendiskriminierungstakts, die zweite Phasenabtastfrequenz und die Phasenabtastfrequenz Phasendifferenz in den zweiten Taktinformationen enthalten sind.

## Revendications

1. Procédé de transmission de données, consistant à :
fragmenter (301), par une première station de base, des données sur protocole Internet, IP, à envoyer en fragments convenant à une transmission par l'intermédiaire d'une ligne de transmission E1 ou T1, afin de générer des données IP fragmentées ;
obtenir (302), par la première station de base, un premier déphasage entre deux discriminations de phase consécutives en réalisant une discrimination de phase sur une première horloge locale au moyen d'une première horloge de discrimination de phase à haute fréquence et à une première fréquence d'échantillonnage de phase, une fréquence de la première horloge de discrimination de phase à haute fréquence, la première fréquence d'échantillonnage de phase et le premier déphasage obtenu étant inclus dans une première information d'horloge ;
encapsuler (101, 304), par la première station de base, les données IP fragmentées et la première information d'horloge dans un paquet IP ; et
envoyer (102, 305), par la première station de base, le paquet IP à une seconde station de base par l'intermédiaire d'une ligne de transmission IP,
les données IP fragmentées et la première information d'horloge dans le paquet IP étant utilisées pour que la seconde station de base restaure le paquet IP en données E1 ou T1.

2. Procédé selon la revendication 1, consistant en outre à :
encapsuler, par la première station de base, une première information de statut de liaison dans le paquet IP.

3. Procédé selon la revendication 2, consistant en outre, avant l'encapsulation, par la première station de base, d'une première information de statut de liaison dans le paquet IP, à :
collecter (303) une information de statut sur une couche physique locale et/ou une couche liaison locale et/ou une récupération d'horloge locale, une indication d'exception de couche physique et/ou une indication d'exception de couche liaison et/ou une indication d'exception de récupération d'horloge, obtenues par l'intermédiaire de la collecte, étant incluses dans la première information de statut de liaison.

4. Procédé selon l'une quelconque des revendications 1 à 3, consistant en outre à :
recevoir (406), par la première station de base, un paquet IP envoyé par la seconde station de base par l'intermédiaire de la ligne de transmission IP, le paquet IP reçu comprenant une charge utile E1 ou T1 et une seconde information d'horloge ; et
restaurer (407) le paquet IP reçu en données IP.

5. Procédé selon la revendication 4, dans lequel la restauration du paquet IP reçu en données IP consiste à :
acquérir la seconde information d'horloge à partir du paquet IP reçu, la seconde information d'horloge comprenant une fréquence d'une deuxième horloge de discrimination de phase à haute fréquence, une deuxième fréquence d'échantillonnage de phase et un deuxième déphasage ;
obtenir un troisième déphasage entre deux discriminations de phase consécutives en réalisant une discrimination de phase sur une deuxième horloge locale au moyen d'une troisième horloge de discrimination de phase à haute fréquence dont la fréquence est la même que celle de la deuxième horloge de discrimination de phase à haute fréquence et à une troisième fréquence d'échantillonnage de phase qui est la même que la deuxième fréquence d'échantillonnage de phase dans la seconde information d'horloge ;
déterminer si le troisième déphasage obtenu pendant la discrimination de phase sur la deuxième horloge locale est cohérent ou non avec le deuxième déphasage dans la seconde information d'horloge et, s'ils sont incohérents, régler la deuxième horloge locale selon le deuxième déphasage dans la seconde information d'horloge ;
restaurer la charge utile E1 ou T1 en données IP selon l'horloge locale réglée.

6. Procédé selon la revendication 4 ou 5, dans lequel le paquet IP reçu comprend en outre une seconde information de statut de liaison, et le procédé consistant en outre, après la réception, par la première station de base, d'un paquet IP envoyé par la seconde station de base par l'intermédiaire de la ligne de transmission IP, à :
mettre à jour (408) un statut de liaison locale selon une indication d'exception de couche physique, une indication d'exception de couche liaison et une indication d'exception de récupération d'horloge dans la seconde information de statut de liaison.

7. Première station de base, comprenant :
un module de fragmentation (503), conçu pour fragmenter des données sur protocole Internet, IP, à envoyer en fragments convenant à une transmission par l'intermédiaire d'une ligne de transmission E1 ou T1, afin de générer des données IP fragmentées ;
un module de discrimination de phase (504), conçu pour obtenir un premier déphasage entre deux discriminations de phase consécutives en réalisant une discrimination de phase sur une première horloge locale au moyen d'une première horloge de discrimination de phase à haute fréquence avant que le module d'encapsulation ne réalise l'encapsulation, et à une première fréquence d'échantillonnage de phase, une fréquence de la première horloge de discrimination de phase à haute fréquence, la première fréquence d'échantillonnage de phase et le premier déphasage obtenu étant inclus dans une première information d'horloge ;
un module d'encapsulation (501), conçu pour encapsuler les données IP fragmentées et la première information d'horloge dans un paquet IP ; et
un module d'envoi (502), conçu pour envoyer le paquet IP encapsulé par le module d'encapsulation à une seconde station de base par l'intermédiaire d'une ligne de transmission IP, les données IP fragmentées et la première information d'horloge dans le paquet IP étant utilisées pour que la seconde station de base restaure le paquet IP en données E1 ou T1.

8. Première station de base selon la revendication 7, comprenant en outre :
un module de réception (506), conçu pour recevoir un paquet IP envoyé par la seconde station de base par l'intermédiaire de la ligne de transmission IP, le paquet IP reçu comprenant une charge utile E1 ou T1 et une seconde information d'horloge ; et
un module de restauration (507), conçu pour restaurer le paquet IP reçu par le module de réception en données IP.

9. Première station de base selon la revendication 8, dans laquelle le module de restauration (507) est spécifiquement conçu pour : acquérir la seconde information d'horloge à partir du paquet IP reçu, et la seconde information d'horloge comprenant une fréquence d'une deuxième horloge de discrimination de phase à haute fréquence, une deuxième fréquence d'échantillonnage de phase et un deuxième déphasage ; obtenir un troisième déphasage entre deux discriminations de phase consécutives en réalisant une discrimination de phase sur une troisième horloge locale au moyen d'une troisième horloge de discrimination de phase à haute fréquence dont la fréquence est la même que celle de la deuxième horloge de discrimination de phase à haute fréquence et à une troisième fréquence d'échantillonnage de phase, pour la discrimination de phase, qui est la même que la deuxième fréquence d'échantillonnage de phase dans la seconde information d'horloge ; déterminer si le troisième déphasage obtenu pendant la discrimination de phase sur la deuxième horloge locale est cohérent ou non avec le deuxième déphasage dans la seconde information d'horloge ; et, s'ils sont incohérents, régler la deuxième horloge locale selon le deuxième déphasage dans la seconde information d'horloge ; et restaurer la charge utile E1 ou T1 en données IP selon l'horloge locale réglée.

10. Seconde station de base, comprenant :
un module de réception (901), conçu pour recevoir un paquet sur protocole Internet, IP, envoyé par une première station de base par l'intermédiaire d'une ligne de transmission IP, le paquet IP comprenant des données IP fragmentées convenant à une transmission par l'intermédiaire d'une ligne de transmission E1 ou T1, et une première information d'horloge ; et
un module de restauration (902), conçu pour restaurer le premier paquet IP en données E1 ou T1 ;
le module de restauration (902) étant spécifiquement conçu pour : acquérir la première information d'horloge à partir du paquet IP, et la première information d'horloge comprenant une fréquence d'une première horloge de discrimination de phase à haute fréquence, une première fréquence d'échantillonnage de phase et un premier déphasage ; obtenir un quatrième déphasage entre deux discriminations de phase consécutives en réalisant une discrimination de phase sur une quatrième horloge locale au moyen d'une quatrième horloge de discrimination de phase à haute fréquence dont la fréquence est la même que celle de la première horloge de discrimination de phase à haute fréquence et à une quatrième fréquence d'échantillonnage de phase qui est la même que la première fréquence d'échantillonnage de phase dans la première information d'horloge ; déterminer si le quatrième déphasage obtenu pendant la discrimination de phase sur la deuxième horloge locale est cohérent ou non avec le premier déphasage dans la première information d'horloge et, s'ils sont incohérents, régler la quatrième horloge locale selon le premier déphasage dans la première information d'horloge ; et restaurer les données IP fragmentées en données E1 ou T1 selon la quatrième horloge locale réglée.

11. Seconde station de base selon la revendication 10, comprenant en outre :
un module d'encapsulation (904), conçu pour encapsuler une charge utile E1 ou T1 et une seconde information d'horloge dans un paquet IP ; et
un module d'envoi (905), conçu pour envoyer le paquet IP encapsulé par le module d'encapsulation (904) à la première station de base par l'intermédiaire de la ligne de transmission IP, la charge utile E1 ou T1 et la seconde information d'horloge étant utilisées pour que la première station de base restaure le paquet IP reçu en données IP.

12. Seconde station de base selon la revendication 11, comprenant en outre :
un module d'extraction (906), conçu pour extraire des données des données E1 ou T1 à envoyer avant que le module d'encapsulation ne réalise l'encapsulation pour former une charge utile E1 ou T1 correspondante ; et
un module de discrimination de phase (907), conçu pour obtenir un deuxième déphasage entre deux discriminations de phase consécutives en réalisant une discrimination de phase sur une deuxième horloge locale au moyen d'une deuxième horloge de discrimination de phase à haute fréquence avant que le module d'encapsulation ne réalise l'encapsulation, et à une deuxième fréquence d'échantillonnage de phase, une fréquence de la deuxième horloge de discrimination de phase à haute fréquence, la deuxième fréquence d'échantillonnage de phase et le déphasage à fréquence d'échantillonnage de phase étant inclus dans la seconde information d'horloge.
